# EUROPEAN PATENT APPLICATION

(11) **EP 2 254 377 A2**
(43) Date of publication of application: **24.11.2010**
(21) Application number: 10162565.5
(22) Date of filing: 11.05.2010
(51) Int. Cl.: H04W 56/00

(54) **Multi-wireless communication device**

(30) Priority: 18.05.2009 JP 2009120190
(71) Applicant: Fujitsu Limited, Kawasaki-shi, Kanagawa 211-8588 (JP)
(72) Inventor: Sakurai, Jun, Kawasaki-shi Kanagawa 211-8588 (JP); Sasaki, Hiroshi, Kawasaki-shi Kanagawa 211-8588 (JP); Kawagishi, Takeshi, Kawasaki-shi Kanagawa 211-8588 (JP)
(74) Representative: Fenlon, Christine Lesley

(57) **Abstract**

A multi-wireless communication device includes: a plurality of communication controllers for controlling communication of a plurality of corresponding different systems, respectively; a plurality of counters for counting communication frames having different frame periods that depend on the systems, respectively; a common counter for counting in a predetermined period; a first converter for converting a count value of one of the counters corresponding to one of the systems under communication into a common count value of the common counter to determine the end of the communication under the one of the systems; and a second converter for converting a count value of the other of the counters into another common count value to determine a system switch period from the one of the systems to the other of the systems beginning from the end of the communication under the one of the systems.

## Description

### FIELD

The embodiments discussed herein are related to a multi-wireless communication device.

### BACKGROUND

In the related art mobile phones which employ multiple wireless systems, for example, the Wideband-Code Division Multiple Access (W-CDMA) system and the Global System for Mobile Communications (GSM) system in dual Radio Access Technology (dual RAT), the wireless systems have been switched over in the following manner. The wireless systems are mutually notified of communication timing so that, for example, a cell detection process or a switchover process can be executed in the GSM system while the mobile phone is communicating in the W-CDMA system.

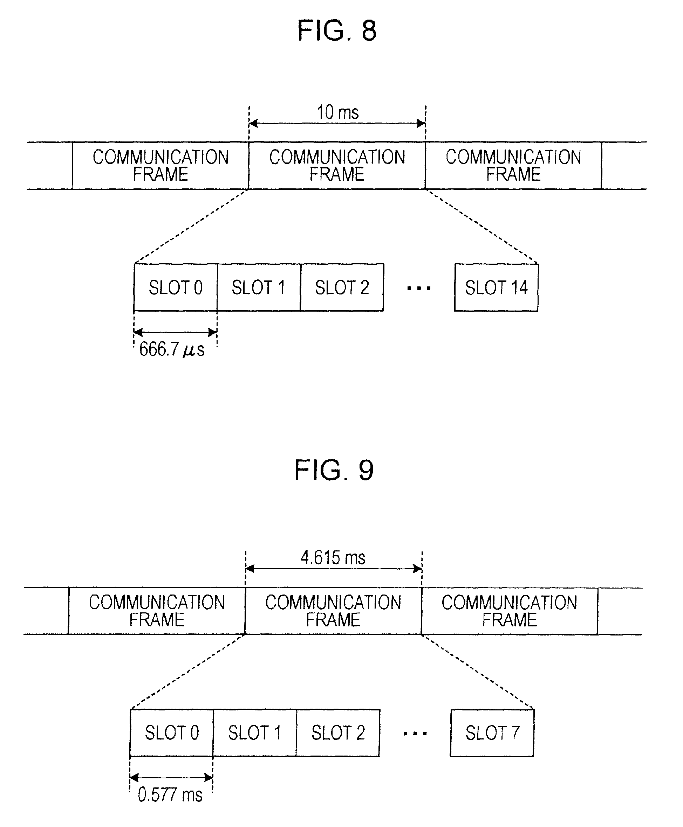

FIG. 8 schematically illustrates a W-CDMA communication frame. FIG. 9 schematically illustrates a GSM communication frame.

The W-CDMA communication frame illustrated in FIG. 8 has a frame length of 10 ms, each frame being constituted by 15 slots (i.e., slot 0 to slot 14). Each slot has a slot length of 666.7 µs.

The GSM communication frame illustrated in FIG. 9 has a frame length of 4.615 ms, each frame being constituted by 8 slots (i.e., slot 0 to slot 7). Each slot has a slot length of 0.577 ms.

Since those wireless systems employ different communication frames, the mobile phones with the W-CDMA system and the GSM system that can be switched over recognize communication timing including, for example, start time and end time of a system switch period of the section between the W-CDMA system and the GSM system in the following manner. The system switch period is a period from the timing the system under communicating changes to other system to the timing the system under communicating return to the original system.

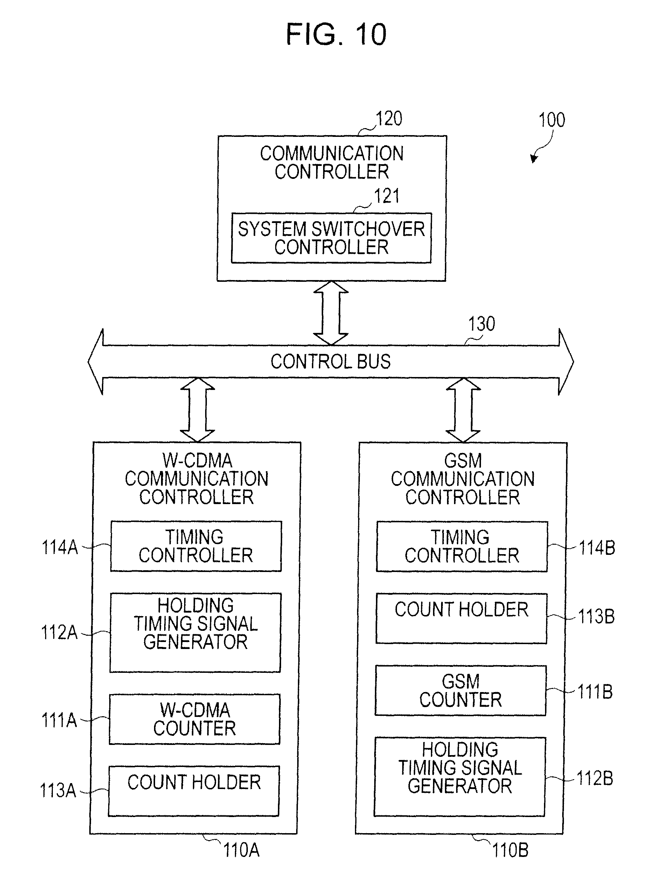

FIG. 10 is a block diagram schematically illustrating an inner structure of a mobile phone using multiple wireless systems (hereinafter, referred to also as a multi mobile phone) of related art.

The multi mobile phone 100 illustrated in FIG. 10 includes a W-CDMA communication controller 110A, a GSM communication controller 110B, a controller 120 and a control bus 130. The W-CDMA communication controller 110A controls W-CDMA communication. The GSM communication controller 110B controls GSM communication. The controller 120 controls the W-CDMA communication controller 110A and the GSM communication controller 110B. The control bus 130 is a communication path between these sections 110A, 110B and 120.

The W-CDMA communication controller 110A includes a W-CDMA counter 111A, a holding timing signal generator 112A, a count holder 113A and a timing controller 114A, which will be described later. The W-CDMA counter 111A counts the W-CDMA communication frames.

The GSM communication controller 110B includes a GSM counter 111B, a holding timing signal generator 112B, a count holder 113B and a timing controller 114B, which will be described later. The GSM counter 111B counts the GSM communication frames.

The controller 120 includes a wireless system switchover controller 121 which enables switchover between the W-CDMA system and the GSM system.

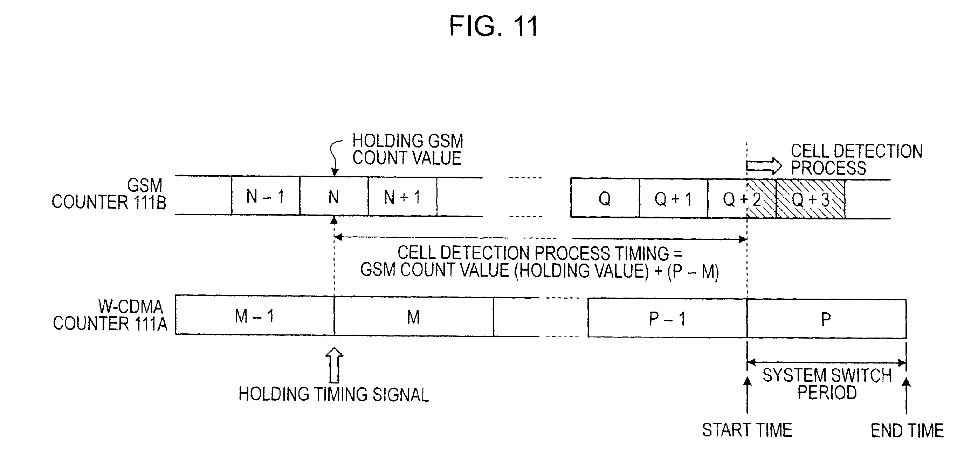

FIG. 11 schematically illustrates operations at cell detection process timing performed between the W-CDMA system and the GSM system according to the related art multi mobile phone 100.

The W-CDMA counter 111A in the W-CDMA communication controller 110A receives a communication frame M-1 during W-CDMA communication. The communication frame M-1 includes an advance presentation of the system switch period P during which a signal reception process is unnecessary in the multi mobile phone 100. The advance presentation of the system switch period P includes timing, e.g., start time and end time, of the system switch period P.

Upon receiving the communication frame M-1 including the advance presentation of the system switch period P, the W-CDMA communication controller 110A notifies, through the holding timing signal generator 112A, the GSM communication controller 110B of holding timing signals and timing of the system switch period P at the boundary between the communication frame M-1 and a subsequent communication frame M.

Upon detecting the holding timing signals and timing of the system switch period P, the GSM communication controller 110B holds, in the count holder 113B, a count value of the GSM counter 111B and parameters of the system switch period P corresponding to a GSM communication frame N at the time of detection.

The timing controller 114B in the GSM communication controller 110B adds, on the basis of the count value and the parameters held in the count holder 113B, a GSM count value N to the start time (P-M) using the count value of the GSM counter 111B. In particular, the timing controller 114B calculates the count value from the count value N of the GSM counter 111B to the start time of the system switch period P.

When the current count value of the GSM counter 111B reaches the count value of the GSM system corresponding to the start time of the system switch period P of the W-CDMA system, the GSM communication controller 110B switches the wireless system to the GSM system within a section of the GSM communication frame in the system switch period P of the W-CDMA system and executes the cell detection process of the GSM system.

Japanese Laid-Open Patent Publication No. 2005-39765 and Japanese Laid-Open Patent Publication No. 2004-312635 are examples of related art.

In the related art multi mobile phone 100, when, for example, advance presentation of the system switch period P is detected by the W-CDMA communication controller 110A while the mobile phone 100 is communicating in the W-CDMA system, the GSM communication controller 110B is notified of the holding timing signal and the timing of the system switch period P. When the GSM communication controller 110B detects the holding timing signal, the count value of the GSM system at the time of detection of the holding timing signal is held by the count holder 113B. A count value corresponding to the start time of the system switch period P is calculated using the count value of the GSM counter 111B on the basis of the held count value. On the basis of the calculated count value, the GSM communication controller 110B is notified of the start time of the system switch period P of the W-CDMA system.

The related art multi mobile phone 100 described above includes a mechanism to mutually notify the wireless systems, namely, the W-CDMA system and the GSM system, of communication timing so that the system switch period P is mutually recognized by the W-CDMA system and the GSM system. Such a mechanism includes the holding timing signal generator 112A or 112B and the count holder 113A or 113B. Accordingly, there is a problem that, in the event that an additional wireless system is introduced in the multi mobile phone 100, the holding timing signal generator such as 112A or 112B and the count holder such as 113A or 113B should also be provided for the additional wireless system. It is therefore difficult to flexibly cope with the increase in the wireless systems.

### SUMMARY

The inventive technique has been devised in view of the above. It is desirable to provide a multi-wireless communication device in which communication timing (i.e., a system switch period) is mutually recognized by different wireless systems while flexibly coping with the increase in the wireless systems.

According to an aspect of the embodiment, a multi-wireless communication device includes: a plurality of communication controllers for controlling communication of a plurality of corresponding different wireless systems, respectively; a plurality of counters for counting communication frames having different frame periods that depend on the wireless systems, respectively; a common counter for counting in a predetermined period; a first converter for converting a count value of one of the counters corresponding to one of the wireless systems under communication into a common count value of the common counter to determine the end of the communication under the one of the wireless systems; and a second converter for converting a count value of the other of the counters into another common count value to determine a system switch period from the one of the wireless systems to the other of the wireless systems beginning from the end of the communication under the one of the wireless systems.

### BRIEF DESCRIPTION OF DRAWINGS

Preferred features of the present invention will now be described, purely by way of example, with reference to the accompanying drawings, in which:-

FIG. 1 is a block diagram schematically illustrating an inner structure of a multi mobile phone according to a first embodiment;
FIG. 2 is a block diagram schematically illustrating an inner structure of a multi mobile phone according to a second embodiment;
FIG. 3 is a flowchart illustrating a processing operation of the multi mobile phone regarding a notification process of a first system switch period;
FIG. 4 illustrates communication timing of the system switch period of the multi mobile phone;
FIG. 5 is a flowchart illustrating a processing operation of a communication controller regarding a system switch period switchover process;
FIG. 6 is a block diagram schematically illustrating an inner structure of a multi mobile phone according to a third embodiment;
FIG. 7 is a flowchart illustrating a processing operation of the multi mobile phone regarding a notification process of a second system switch period;
FIG. 8 schematically illustrates a W-CDMA communication frame;
FIG. 9 schematically illustrates a GSM communication frame;
FIG. 10 is a block diagram schematically illustrating an inner structure of a related art multi mobile phone; and
FIG. 11 schematically illustrates operations at cell detection process timing performed between the W-CDMA system and the GSM system regarding the related art multi mobile phone.

### DESCRIPTION OF EMBODIMENTS

Referring now to the drawings, embodiments of a multi-wireless communication device and a communication-timing-notifying method disclosed herein will be described.

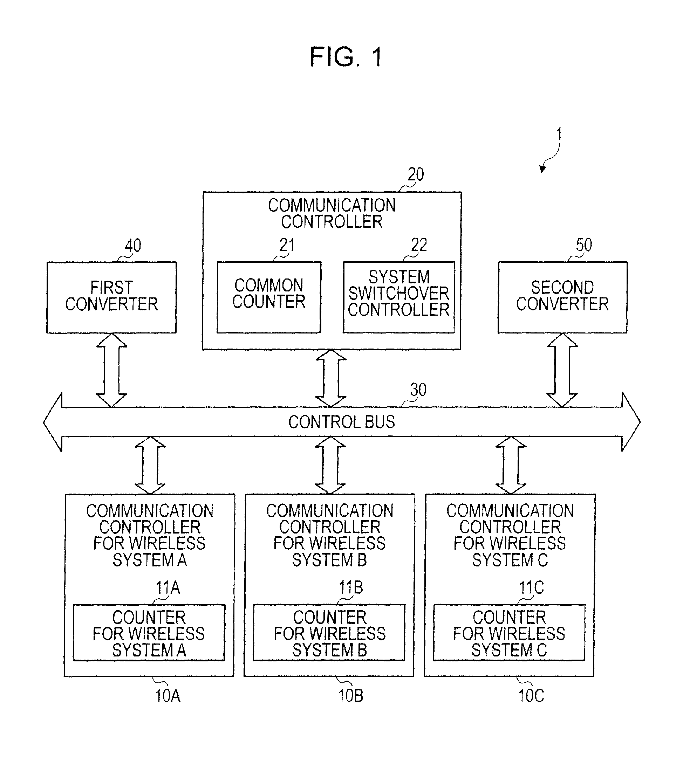

FIG. 1 is a block diagram schematically illustrating an inner structure of a multi mobile phone according to a first embodiment.

A multi mobile phone 1 illustrated in FIG. 1 includes multiple communication controllers 10A to 10C, a controller 20 and a control bus 30. Each of the communication controllers 10A to 10C is provided for the corresponding wireless system to control communication of the wireless system. The controller 20 controls the communication controllers 10A to 10C. The control bus 30 is a communication path among the communication controllers 10A to 10C and the controller 20.

In FIG. 1, each multiple communication controllers 10A, 10B, and 10C has a count holder for holding count value, respectively. The count holders are not illustrated in FIG. 1. The count holder has the same function as the count holder 113A or 113B which is illustrated in FIG. 10.

The controller 20 includes a common counter 21 which counts in a predetermined period common to the wireless systems and a wireless system switchover controller 22 which executes switchover control of the wireless systems. The controller 20 selects one of the wireless systems A to C under communication in accordance with the common count value of the common counter 21.

The wireless systems correspond to a wireless system A, a wireless system B and a wireless system C, which may be the W-CDMA system and the GSM system.

The communication controller 10A controls communication of the wireless system A. The communication controller 10B controls communication of the wireless system B. The communication controller 10C controls communication of the wireless system C.

The communication controller 10A includes a counter 11A for counting communication frames of the wireless system A. The communication controller 10B includes a counter 11B for counting communication frames of the wireless system B. The communication controller 10C has a counter 11C for counting communication frames of the wireless system C. Each of counters 11A to 11C counts communication frames in a frame period that depends on each of wireless systems.

The multi mobile phone 1 also includes a first converter 40. The first converter 40 converts a count value of one of the counters corresponding to one of the wireless systems under communication into a common count value of the common counter to determine the end of the communication under the one of the wireless systems.

In this embodiment, the first converter 40 calculates, among communication timing of the wireless system under communication, specific communication timing using a count value of the counter corresponding to the wireless system under communication and then converts the calculated count value into a common count value of the common counter 21.

Note that the specific communication timing corresponds to, for example, a system switch period among the communication timing of the wireless system. One of the communication controllers 10A to 10C under communication sends count values indicating start time and end time of the switching period to the controller 20.

The first converter 40 calculates, for example, specific communication timing, among the communication timing of the wireless system A under communication, using the count value of the counter 11A for the wireless system A of the wireless system A under communication.

When the specific communication timing is calculated using the count value of the wireless system A, the first converter 40 converts the calculated count value into a common count value of the common counter 21.

The multi mobile phone 1 includes a second converter 50. The second converter 50 converts a count value of the other of the counters into another common count value to determine a system switch period from the one of the wireless systems to the other of the wireless systems beginning from the end of the communication under the one of the wireless systems.

In this embodiment, the second converter 50 converts the common count value converted by the first converter 40 into a count value of the counter 11 corresponding to a wireless system of the notification destination so that the specific communication timing can be recognized by the communication controller 10 of the notification destination regarding a wireless system other than the wireless system under communication.

The second converter 50 converts the common count value of the specific communication timing into a count value of the counter 11B for the wireless system B of the wireless system B of the notification destination so that, for example, the specific communication timing of the wireless system A can be recognized by the communication controller 10B for the wireless system B of the notification destination other than the wireless system A under communication.

The second converter 50 converts the common count value of the specific communication timing into the count value of the wireless system B, which is then notified to the communication controller 10B for the wireless system. With this configuration, although the communication controller 10B for the wireless system B is not able to recognize the count value of the wireless system A corresponding to the specific communication timing of the wireless system A, the communication controller 10B for the wireless system B can recognize the specific communication timing of the wireless system A converted by the second converter 50.

Each of the first converter 40 and second converter 50 convert the count value of one of the counters 11A to 11C corresponding to one of the wireless systems A to C under communication into the common value of the common counter 21 in accordance with one of a plurality of conversion ratios corresponding to one of the wireless systems A to C under communication, one of the conversion ratios being ratio between the predetermined period of the common counter 21 and one of the frame periods corresponding to one of the wireless systems A to C, respectively.

Hereinafter, an operation of the multi mobile phone 1 according to the first embodiment will be described.

For example, an operation of notifying the communication controller 10B for the wireless system B of the specific timing after a communication frame including advance presentation regarding the specific communication timing is detected among communication timing of the wireless system A during communication in the wireless system A will be described.

When detected the communication frame including the advance presentation regarding the specific communication timing among the communication timing of the wireless system A under communication, the controller 20 notifies the communication controller 10A for the wireless system A of the advance presentation regarding the specific communication timing.

The communication controller 10A for the wireless system A calculates the specific communication timing of the wireless system A as the count value of the counter 11A for the wireless system A.

When calculated the specific communication timing of the wireless system A using the count value of the counter 11A for the wireless system A, the first converter 40 converts the calculated count value into the common count value of the common counter 21.

The second converter 50 converts the common count value converted by the first converter 40 into the count value of the counter 11B for the wireless system B in the communication controller 10B for the wireless system B of the notification destination so that the specific communication timing can be recognized by the communication controller 10B for the wireless system B of the notification destination.

With this configuration, the communication controller 10B for the wireless system B recognizes the specific communication timing of the wireless system A on the basis of the count value of the wireless system B converted in the second converter 50.

In the first embodiment, when, for example, the communication controller 10B for the wireless system B is made to recognize the specific communication timing among the communication timing of the wireless system A, the count value of the specific communication timing is calculated by the counter 11A for the wireless system A, the thus-calculated count value of the wireless system A is converted into the common count value of the common counter 21 and the thus-converted common count value is converted using a count value of the counter 11B for the wireless system B of the wireless system B which is the notification destination. With this configuration, the specific communication timing of the wireless system A can be recognized by the communication controller 10B for the wireless system B.

As described above, the common count value of the wireless systems is used in the first embodiment. Thus, the specific communication timing can be recognized among different wireless systems, and the need of providing a mechanism to mutually notify the count value among the wireless systems can be eliminated while flexibly coping with a further increase in the wireless systems and reducing number of parts.

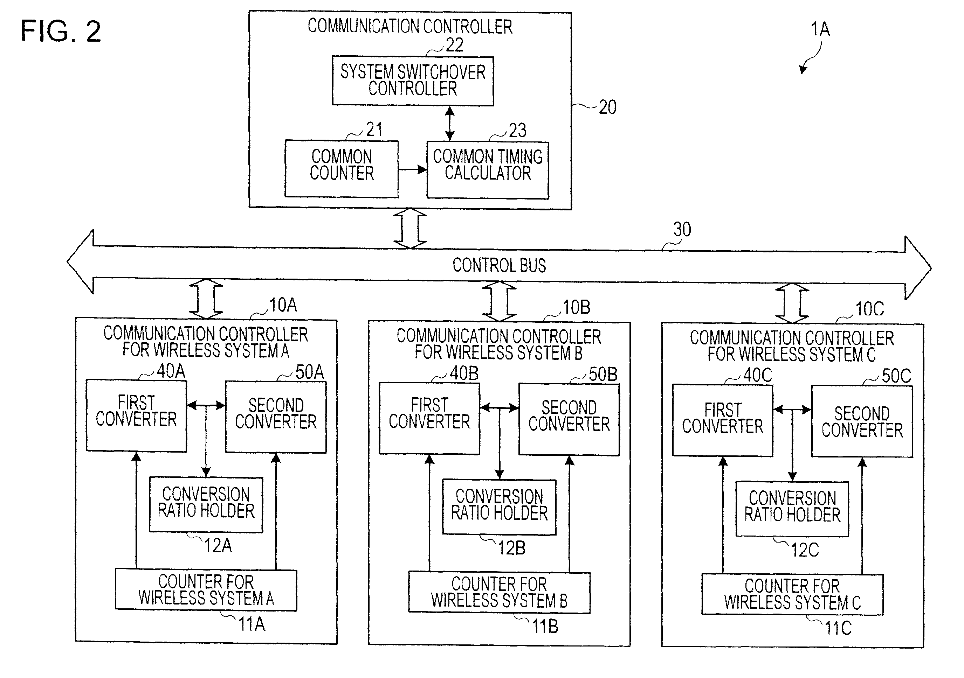

Next, a second embodiment will be described in which a first converters 40A to 40C and second converters 50A to 50C are incorporated in the communication controllers 10A to 10C. FIG. 2 is a block diagram schematically illustrating an inner structure of a multi mobile phone according to the second embodiment. The same components as those of the multi mobile phone 1 according to the first embodiment will be denoted by the same reference numerals and description thereof regarding structures and operations will be omitted.

The multi mobile phone 1A illustrated in FIG. 2 differs from the multi mobile phone 1 illustrated in FIG. 1 mainly in that the first converters 40A to 40C and the second converters 50A to 50C are incorporated in the communication controllers 10A to 10C of each wireless system.

The communication controllers 10A to 10C includes, in addition to the counters 11A to 11C, the first converter 40A to 40C, the second converters 50A to 50C and the conversion ratio holders 12A to 12C. Each of the conversion ratio holders 12A to 12C holds conversion ratios used in conversion between the count value of the wireless system and the common count value, respectively.

The conversion ratio holder 12A of the communication controller 10A for the wireless system A holds conversion ratios used in conversion between the count value of the wireless system A and the common count value. The conversion ratio holder 12B of the communication controller 10B for the wireless system B holds conversion ratios used in conversion between the count value of the wireless system B and the common count value. The conversion ratio holder 12C of the communication controller 10C for the wireless system C holds conversion ratios used in conversion between the count value of the wireless system C and the common count value.

The controller 20 includes a common timing calculator 23 as well as the common counter 21 and the wireless system switchover controller 22.

When received a communication frame including advance presentation including specific communication timing, such as the system switch period, from a network regarding the wireless system under communication, the controller 20 requests a common count value of the specific communication timing with respect to the communication controller 10 regarding the wireless system under communication.

When, for example, detected the common count value request from the controller 20, the first converter 40A calculates specific communication timing, e.g., the system switch period, among the communication timing of the wireless system A under communication using a count value of the counter 11A for the wireless system A. The first converter 40A then converts, on the basis of the conversion ratio held in the conversion ratio holder 12A, the count value of the wireless system A of the system switch period into a common count value. The common count value of the system switch period is then notified to the controller 20.

When detected the common count value of the system switch period from the first converter 40A, the common timing calculator 23 in the controller 20 monitors whether the common count value of the system switch period has reached the common count value of the common counter 21.

When the current common count value of the common counter 21 reaches the common count value of the system switch period, the wireless system switchover controller 22 in the controller 20 makes a switchover selection of the wireless system A under communication to another wireless system of the notification destination.

When detected the common count value of the system switch period from the first converter 40A, the controller 20 notifies the common count value of the system switch period to the communication controller 10 of the notification destination, e.g., the communication controller 10B for the wireless system B.

When detected the common count value of the system switch period from the controller 20, the second converter 50B in the communication controller 10B for the wireless system B converts the common count value of the system switch period into the count value of the wireless system B on the basis of the conversion ratio held in the conversion ratio holder 12B.

The communication controller 10B for the wireless system B monitors whether the current count value of the counter 11B for the wireless system B has reached the count value regarding the system switch period.

When the current count value reaches the count value regarding the system switch period, the communication controller 10B for the wireless system B executes various processes, such as a cell detection process of the wireless system B, using the system switch period of the wireless system A.

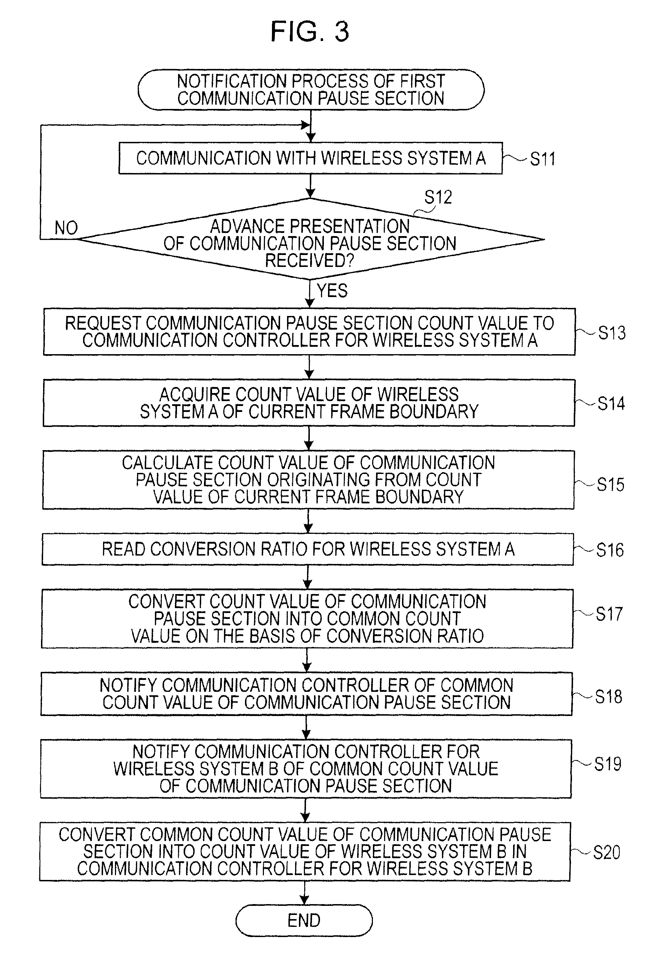

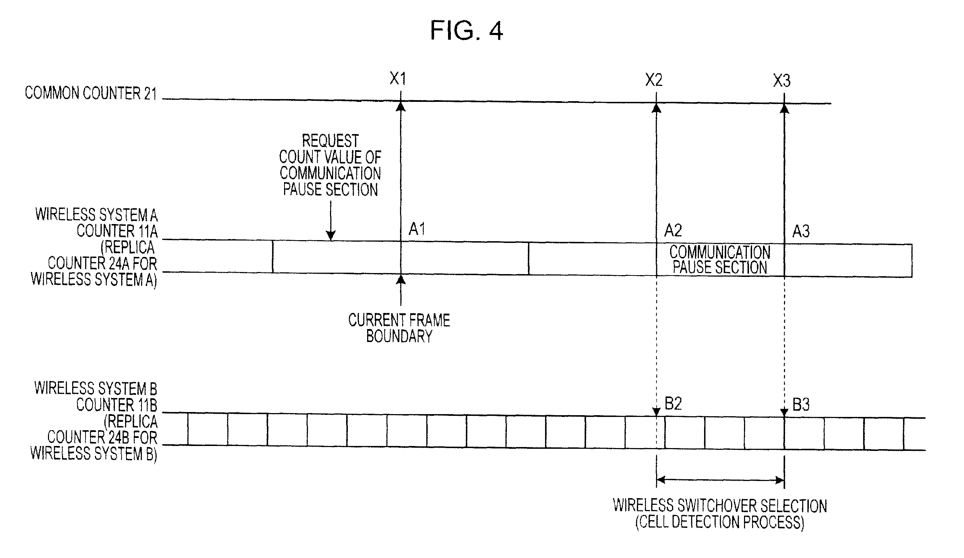

Hereinafter, an operation of the multi mobile phone 1A according to the second embodiment will be described. FIG. 3 is a flowchart illustrating a processing operation inside the multi mobile phone 1A regarding the notification process of the first system switch period. FIG. 4 illustrates the communication timing of the system switch period of the multi mobile phone 1A.

The notification process of the first system switch period illustrated in FIG. 3 is a process for notifying the communication timing of the system switch period regarding the wireless system under communication one of the communication controllers 10A to 10C of another wireless system. For the ease of illustration, the wireless system under communication is the wireless system A and the notification destination to which the communication timing of the system switch period is the communication controller 10B for the wireless system B in the description.

As illustrated in FIG. 3, the controller 20 receives, during communication with the wireless system A (step S11), a communication frame which includes advance presentation of the system switch period (step S12).

When the communication frame including the advance presentation of the system switch period is received (affirmative in step S12), the controller 20 requests the system switch period count value with respect to the communication controller 10A for the wireless system A under communication (step S13).

When detected a request for the system switch period count value, the counter 11A for the wireless system A in the communication controller 10A for the wireless system A acquires a count value A1 of the wireless system A corresponding to a boundary of the current communication frame of the wireless system A as illustrated in FIG. 4 (step S14).

When acquired the count value A1 of the wireless system A corresponding to the current frame boundary, the first converter 40A in the communication controller 10A for the wireless system A calculates count values (A2, A3) of the communication timing of the system switch period originating from the count value A1 of the wireless system A (step S15). The count value of the communication timing of the system switch period corresponds to the count value A2 at the start time of the system switch period and the count value A3 at the end time of the system switch period.

The first converter 40A reads a conversion ratio for the wireless system A out of the conversion ratio holder 12A (step S16) and converts, on the basis of the conversion ratio for the wireless system A, the count values (A2, A3) of the originating count value A1 and the system switch period into common count values (X1, X2, X3) (step S17).

The first converter 40A then notifies the common count values (X2, X3) of the system switch period to the controller 20 (step S18).

When detected the common count values (X2, X3) of the system switch period regarding the wireless system A, the controller 20 notifies the common count values (X2, X3) of the system switch period to the communication controller 10B for the wireless system B which is the notification destination to which the communication timing of the system switch period is to be notified (step S19).

When detected the common count values (X2, X3) of the system switch period regarding the wireless system A, the counter 11B for the wireless system B in the communication controller 10B for the wireless system B converts, on the basis of the conversion ratio for the wireless system B held in the conversion ratio holder 12B, the common count values (X2, X3) of the system switch period into count values (B2, B3) of the wireless system B (step S20) to terminate the processing operation illustrated in FIG. 4.

With this configuration, the communication controller 10B for the wireless system B recognizes the system switch period of the wireless system A using the count value of the wireless system B. The wireless system under the communication changes from the wireless system B to the wireless system A after the end of the system switch period.

When the current count value of the counter 11B for the wireless system B reaches the count value B2 of the wireless system B regarding the system switch period in step S20, the communication controller 10B for the wireless system B determines that the system switch period of the wireless system A has started and executes processes, such as the cell detection process, of the wireless system B in the same section.

When the current count value of the counter 11B for the wireless system B reaches the count value B3 of the wireless system B regarding the system switch period, the communication controller 10B for the wireless system B determines that the system switch period of the wireless system A has been completed and terminates the processes, such as the cell detection process of the wireless system B.

If the controller 20 has not received a communication frame including the advance presentation of the system switch period (negative in step S12), the routine proceeds to step S11 where it is monitored whether the multi mobile phone 1A is communicating in the wireless system A.

In the notification process of the first system switch period illustrated in FIG. 3, when the advance presentation of the system switch period is received the multi mobile phone 1A is communicating in the wireless system A, the communication controller 10A for the wireless system A calculate the count value of the system switch period, converts the count value into the common count value and then notifies the common count value to the controller 20. At the same time, the common count value of the system switch period is notified to the communication controller 10B for the wireless system B of the notification destination. The communication controller 10B for the wireless system B converts the common count value of the system switch period into the count value of the wireless system B. With this configuration, the communication controller 10B for the wireless system B can recognize the communication timing of the system switch period of the wireless system A using the common count value.

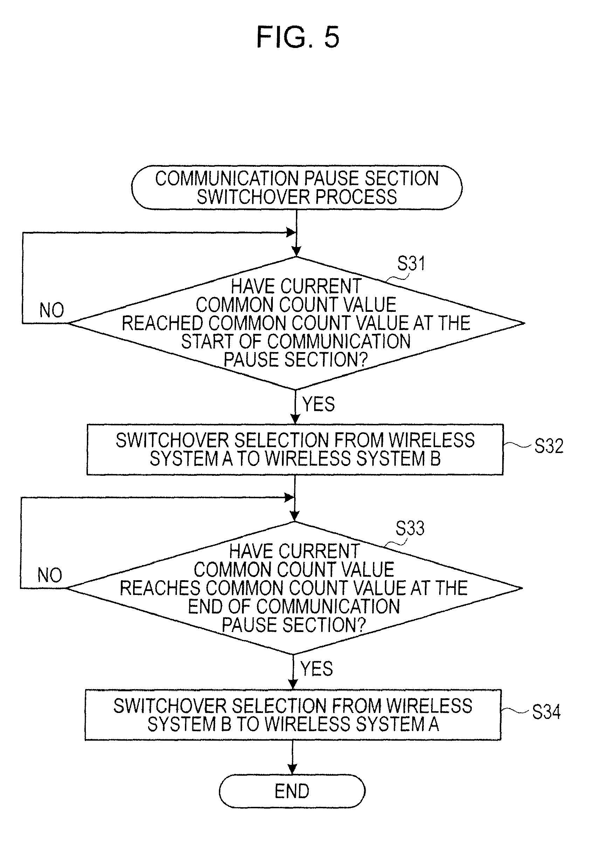

FIG. 5 is a flowchart illustrating a processing operation inside the controller 20 regarding a system switch period switchover process.

The system switch period switchover process illustrated in FIG. 5 is a process to make a switchover selection of the wireless system on the basis of the communication timing of the system switch period. For the ease of illustration, a switchover selection into the wireless system B in the system switch period of the wireless system A is made in the description.

In FIG. 5, the common timing calculator 23 in the controller 20 determines whether the current common count value of the common counter 21 has reached the common count value X2 corresponding to the start time of the system switch period (step S31).

When the current common count value reaches the common count value X2 corresponding to the start time of the system switch period (step S31 affirmative), the wireless standard switchover controller 22 in the controller 20 determines that the system switch period of the wireless system A has started and makes a switchover selection of the wireless system A into the wireless system B (step S32). The communication controller 10B for the wireless system B executes the processes, such as the cell detection process, using the communication frame of the wireless system B after the switchover selection is made into the wireless system B.

The common timing calculator 23 in the controller 20 determines whether the current common count value of the common counter 21 has reached the common count value X3 corresponding to the end time of the system switch period (step S33).

When the current common count value reaches the common count value X3 corresponding to the end time of the system switch period (affirmative in step S33), the wireless standard switchover controller 22 in the controller 20 determines that the system switch period of the wireless system B terminated and makes a switchover selection of the wireless system B into the wireless system A (step S34). After the switchover selection is made into wireless system A, the communication controller 10A for the wireless system A resumes communication of the wireless system A before the system switch period.

When the current common count value has not reached the common count value X2 corresponding to the start time of the system switch period (negative in step S31), the routine proceeds to step S31 where the common timing calculator 23 continues monitoring of the common count value.

When the current common count value has not reached the common count value X3 corresponding to the end time of the system switch period (negative in step S33), the routine proceeds to step S33 where the common timing calculator 23 continues monitoring the common count value.

When the current common count value reaches the common count value corresponding to the start time of the system switch period of the wireless system A in the system switch period switchover process illustrated in FIG. 5, it is determined that the system switch period of the wireless system A has started and the switchover selection into the wireless system B is made. When the current common count value reaches the common count value corresponding to the end time of the system switch period of the wireless system A, it is determined that the system switch period of the wireless system B is terminated and a switchover selection into the wireless system A is made.

When the advance presentation of the system switch period is received during communication in the wireless system in the second embodiment, the communication controller 10 under communication calculates the count value of the system switch period and the count value is converted into the common count value. The communication controller 10 notifies the common count value of the system switch period to the communication controller 10 of the notification destination and converts the common count value of the system switch period into the count value of the wireless system of the notification destination. With this configuration, the communication controller 10 of the notification destination can recognize the communication timing of the system switch period of the wireless system using the common count value.

When detected the communication frame including the advance presentation of the system switch period of the wireless system in the second embodiment, the communication timing, i.e., the start time, and the end time of the system switch period originating from the frame boundary of the communication frame after the communication frame is calculated using the count value of the counter corresponding to the wireless system under communication. With this configuration, the communication timing of the system switch period can be acquired using the count value of the wireless system under communication.

Since the common count value of the wireless systems is used in the second embodiment, specific communication timing can be recognized among different wireless systems and the need of a mechanism to mutually notify the count value among the wireless systems is eliminated. With this configuration, a future increase in the wireless systems can be flexibly coped with while reducing number of parts.

In the second embodiment, the first converter 40A (40B, 40C), the second converter 50A (50B, 50C) and the conversion ratio holder 12A (12B, 120C) used in the conversion process between the count value of the wireless system and the common count value are incorporated in each of the communication controllers 10.
Alternatively, the conversion process of the common count value may be executed in the controller 20, which will be described below as a third embodiment.

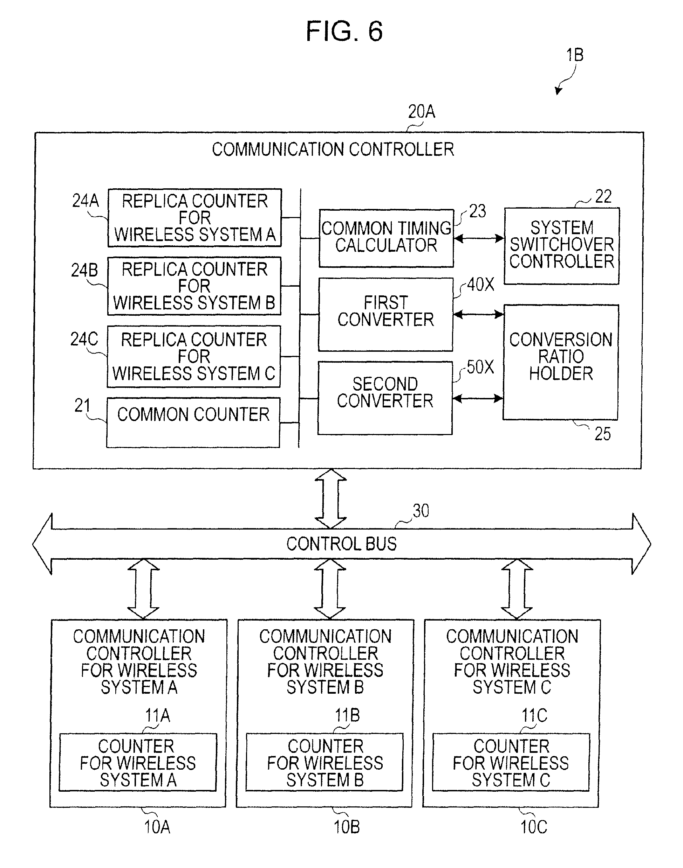

FIG. 6 is a block diagram schematically illustrating an inner structure of the multi mobile phone according to a third embodiment. The same components as those of the multi mobile phone 1 according to the first embodiment will be denoted by the same reference numerals and description thereof regarding structures and operations will be omitted.

The multi mobile phone 1B illustrated in FIG. 6 differs from the multi mobile phone 1 illustrated in FIG. 1 mainly in that a first converter 40X and a second converter 50X are incorporated in a controller 20A and replica counters 24A to 24C for counting in the same frame period as that of the counters 11A to 11C for each wireless system are incorporated in the controller 20A.

The controller 20A includes, in addition to a common counter 21 and a wireless standard switchover controller 22, a common timing calculator 23, the replica counters 24A to 24C, the first converter 40X, a second converter 50X and a conversion ratio holder 25. Each of the replica counters 24A to 24C counts in the same frame period as that of the counter 11 for each wireless system. The first converter 40X converts a count value of each of the replica counters 24A to 24C for each wireless system into a common count value of the common counter 21. The second converter 50X converts the common count value of the common counter 21 into a count value for each wireless system. The conversion ratio holder 25 holds conversion ratios used in conversion between the count value for each wireless system and a common count value.

The replica counter 24A for the wireless system A has the same frame period as that of the counter 11A for the wireless system A. The replica counter 24B for the wireless system B has the same frame period as that of the counter 11B for the wireless system B. The replica counter 24C for the wireless system C has the same frame period as that of the counter 11C for the wireless system C.

The controller 20A receives a communication frame including the advance presentation which presents specific communication timing, such as the system switch period, from a network regarding the wireless system under communication.

The first converter 40X calculates the specific communication timing regarding the wireless system under communication, e.g., the system switch period, using the count value of one of the replica counter 24A to 24C regarding the wireless system under communication. The first converter 40X converts, on the basis of the conversion ratio for the wireless system under communication held in the conversion ratio holder 25, the count value of the wireless system of the system switch period into a common count value. The common count value of the system switch period is then notified to the common timing calculator 23.

When detected the common count value of the system switch period, the second converter 50X converts, on the basis of the conversion ratio for the wireless system of the notification destination held in the conversion ratio holder 25, the common count value of the system switch period into the count value of the wireless system of the notification destination. The count value of the system switch period is then notified to communication controller 10 of the notification destination.

When detected the common count value of the system switch period from the first converter 40X, the common timing calculator 23 monitors whether the common count value has reached the common count value of the system switch period on the basis of the common count value of the common counter 21.

When the current common count value of the common counter 21 reaches the common count value of the system switch period, the wireless standard switchover controller 22 makes a switchover selection of the wireless system under communication into another wireless systems of the notification destination.

When detected the count value of the wireless system regarding the system switch period converted by the second converter 50X, the communication controller 10 of the notification destination monitors whether the current count value of the counter 11 reached the count value of the system switch period.

When the current count value reaches the count value regarding the system switch period, the communication controller 10 executes various processes, such as the cell detection process, of its own wireless system using the system switch period of the wireless system.

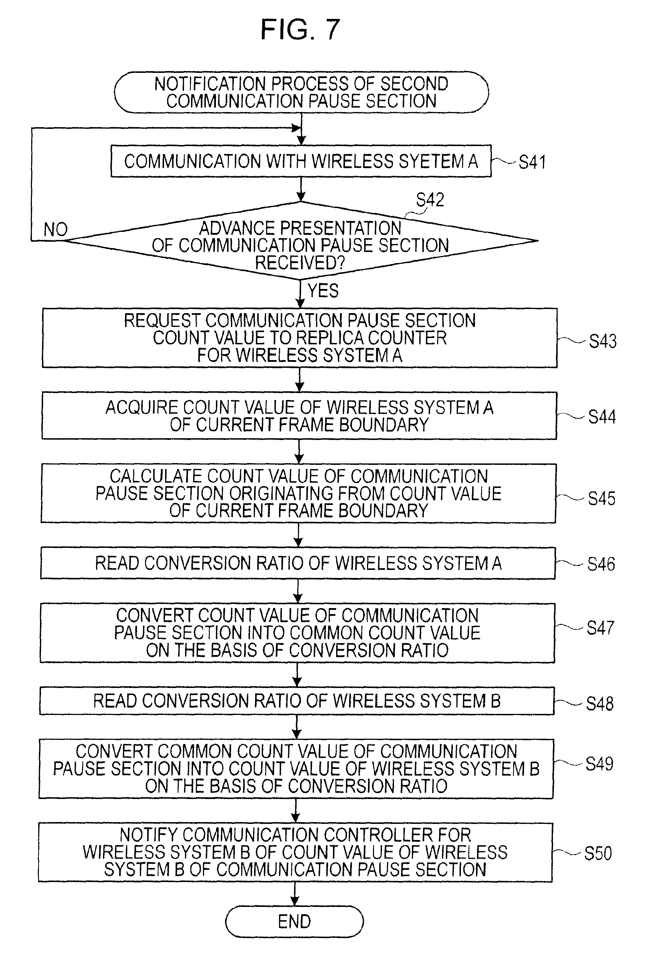

Hereinafter, an operation of the multi mobile phone 1B according to the third embodiment will be described. FIG. 7 is a flowchart illustrating a processing operation inside the multi mobile phone 1B regarding the notification process of the second system switch period.

The notification process of the second system switch period illustrated in FIG. 7 is a process for notifying the communication timing of the system switch period regarding the wireless system under communication to the communication controller 10 of another wireless system. For the ease of illustration, the wireless system under communication is the wireless system A and the notification destination to which the communication timing of the system switch period is the communication controller 10B for the wireless system B in the description.

As illustrated in FIG. 7, the controller 20A receives, during communication with the wireless system A (step S41), a communication frame which includes advance presentation of the system switch period (step S42).

When the communication frame including the advance presentation of the system switch period is received (affirmative in step S42), the controller 20A requests the system switch period count value with respect to the replica counter 24A for the wireless system A under communication (step S43).

When detected a request for the system switch period count value, the replica counter 24A for the wireless system A acquires a count value A1 of the wireless system A corresponding to a boundary of the current communication frame of the wireless system A as illustrated in FIG. 4 (step S44).

When acquired the count value A1 of the wireless system A corresponding to the current frame boundary, the first converter 40X calculates count value (A2, A3) of the communication timing of the system switch period originating from the count value A1 of the wireless system A (step S45). The count value of the communication timing of the system switch period corresponds to the count value A2 at the start time of the system switch period and the count value A3 at the end time of the system switch period.

The first converter 40X reads a conversion ratio for the wireless system A out of the conversion ratio holder 25 (step S46) and converts, on the basis of the conversion ratio for the wireless system A, the count values (A2, A3) of the originating count value A1 and the system switch period into common count values (X1, X2, X3) (step S47).

When detected the common count values (X2, X3) of the system switch period converted by the first converter 40X, the second converter 50X reads the conversion ratio for the wireless system B out of the conversion ratio holder 25 (step S48) and converts, on the basis of the conversion ratio for the wireless system B, the common count values (X2, X3) of the system switch period into the count values (B2, B3) of the wireless system B of the replica counter 24B for the wireless system B (step S49).

When converted the count values (B2, B3) of the wireless system B regarding the system switch period, the second converter 50X notifies the count values of the wireless system B to the communication controller 10B for the wireless system B (step S50) to terminate the processing operation illustrated in FIG. 7.

With this configuration, the communication controller 10B for the wireless system B recognizes the system switch period of the wireless system A using the count value of the wireless system B.

When the current count value of the counter 11B for the wireless system B reaches the count value B2 of the wireless system B regarding the system switch period acquired in step S50, the communication controller 10B for the wireless system B determines that the system switch period of the wireless system A has started and executes processes, such as the cell detection process, of the wireless system B in the same section.

When the current count value of the counter 11B for the wireless system B reaches the count value B3 of the wireless system B regarding the system switch period, the communication controller 10B for the wireless system B determines that the system switch period of the wireless system A has been completed and terminates the processes, such as the cell detection process of the wireless system B.

If the controller 20A has not received a communication frame including the advance presentation of the system switch period (negative in step S42), the routine proceeds to step S41 where it is monitored whether the multi mobile phone 1A is communicating in the wireless system A.

In the notification process of the second system switch period illustrated in FIG. 7, when received the advance presentation of the system switch period during the communication in the wireless system A, the replica counter 24A for the wireless system A calculates the count value of the system switch period and converts the count value into the common count value. The replica counter 24B for the wireless system B converts the common count value using the count value of the wireless system B which is the notification destination and notifies the count value of the wireless system B to the communication controller 10B for the wireless system B. With this configuration, the communication controller 10B for the wireless system B can recognize the communication timing of the system switch period of the wireless system A using the common count value.

When the advance presentation of the system switch period is received during communication in the wireless system in the third embodiment, the replica counter 24 of the wireless system under communication calculates the count value of the system switch period and the count value is converted into the common count value. The replica counter 24 notifies the common count value of the system switch period to the communication controller 10 of the notification destination and converts the common count value of the system switch period into the count value of the wireless system of the notification destination in the communication controller 10. With this configuration, the communication controller 10 of the notification destination can recognize the communication timing of the system switch period of the wireless system using the common count value.

The communication controller 20A has replica counters 24A to 24C, so the communication counter 20A can recognize the communication timing of the system switch period without communicating with the communication controllers 10A to 10C. Therefore, the multi mobile phone 1 can decrease the traffic of the control bus 30.

Since the common count value of the wireless systems is used in the third embodiment, the system switch period can be recognized among different wireless systems and the need of a mechanism to mutually notify the count value among the wireless systems is eliminated. With this configuration, a future increase in the wireless systems can be flexibly coped with while reducing number of parts.

Although the system switch period has been described as the specific communication timing of the wireless system in the first to third embodiments, similar effects can be provided with other communication timing.

Although the cell detection process of other wireless systems is executed during the system switch period as the specific communication timing of the wireless system in the first to third embodiments, the embodiments are not limited to the cell detection process and various processes can be executed.

In the foregoing second and third embodiments, the count value of the wireless system A regarding the system switch period of the wireless system A under communication is converted into the common count value and the converted common count value is further converted into the count value of the wireless system B of the notification destination (see FIGS. 3 and 7). Similar effects can be provided, however, by converting the count value of the wireless system regarding the system switch period of the wireless system under communication into the common count value and further converting the converted common count value into the count value of the wireless system which is the notification destination.

Although three wireless systems A, B and C can be switched over in the foregoing first to third embodiments, four wireless systems may also be employed. That is, similar effects can be provided with two or more wireless systems.

Although the embodiments have been described in the foregoing, the range of the technical idea is not limited by the embodiments. Various embodiments may be implemented without departing from the technical idea defined in the claims. The effects described herein are not limited to the same.

The various processes in the embodiments that have been described to be executed automatically may alternatively be executed manually on the whole or partially. On the contrary, processes that have been described to be executed manually may alternatively be executed automatically on the whole or partially. Procedures, control procedures, concrete names and other information including various data and parameters used in the description of the embodiments may be changed suitably unless otherwise stated.

Device components have been illustrated as functional concept and thus are not necessarily configured as illustrated. That is, aspects of the devices are not limited to those illustrated.

Various process functions executed on the devices may be executed on the whole or partially on a central processing unit (CPU), a microcomputer, such as a micro processing unit (MPU) and a micro controller unit (MCU), a program to be analyzed and executed on the CPU (or microcomputers, such as MPU and MCU) or hardware using wired logic.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A multi-wireless communication device comprising:
a plurality of communication controllers for controlling communication of a plurality of corresponding different wireless systems, respectively;
a plurality of counters for counting communication frames having different frame periods that depend on the wireless systems, respectively;
a common counter for counting in a predetermined period;
a first converter for converting a count value of one of the counters corresponding to one of the wireless systems under communication into a common count value of the common counter to determine the end of the communication under the one of the wireless systems; and
a second converter for converting a count value of the other of the counters into another common count value to determine a system switch period from the one of the wireless systems to the other of the wireless systems beginning from the end of the communication under the one of the wireless systems.

2. The multi-wireless communication device of claim 1, wherein the wireless system under the communication changes from the other of the wireless systems to the one of the wireless systems after the end of the system switch period.

3. The multi-wireless communication device of claim 1 or 2, further comprising a controller for selecting one of the wireless systems under communication in accordance with the common count value of the common counter.

4. The multi-wireless communication device of any of claims 1 to 3, wherein each of the first and second converters convert the count value of one of the counters corresponding to one of the wireless systems under communication into the common value of the common counter in accordance with one of a plurality of conversion ratios corresponding to one of the wireless systems under communication, one of the conversion ratios being ratio between the predetermined period of the common counter and one of the frame periods corresponding to one of the wireless systems, respectively.

5. The multi-wireless communication device of claim 3, or claim 4 when read as appended to claim 3, wherein the controller has a plurality of replica counters for counting in the same frame periods as the counters corresponding to the wireless systems, respectively.

6. The multi-wireless communication device of any of claims 1 to 5, wherein the communication controller under communication sends count values indicating start time and end time of the switching period to the controller.

7. The multi-wireless communication device of any of claims 1 to 6, wherein the first converter calculates the count value of the system switch period counted from a boundary of a current frame of the wireless system under communication.

8. A communication method for a multi-wireless communication device comprising:
controlling communication of a plurality of corresponding different wireless systems, respectively;
counting communication frames having different frame periods that depend on the wireless systems, respectively;
counting a common count value in a predetermined period;
converting a count value of one of the wireless systems under communication into the common count value to determine the end of the communication under the one of the wireless systems;
converting a count value of the other of the wireless systems into another common count value to determine a system switch period from the one of the wireless systems to the other of the wireless systems beginning from the end of the communication under the one of the wireless systems.
